# EUROPÄISCHE PATENTSCHRIFT

(11) **EP 2 702 694 B1**
(45) Veröffentlichungstag und Bekanntmachung des Hinweises auf die Patenterteilung: **07.06.2017**
(21) Anmeldenummer: 12723393.0
(22) Anmeldetag: 25.04.2012
(51) Int. Cl.: H05H 1/46, H04B 1/26

(54) **AUTO-HETERODYNEMPFÄNGER**
AUTO-HETERODYNE RECEIVER
RÉCEPTEUR AUTO-HÉTÉRODYNE

(30) Priorität: 26.04.2011 DE 102011017545
(43) Veröffentlichungstag der Anmeldung: 05.03.2014
(73) Patentinhaber: Forschungsverbund Berlin E.V., 12489 Berlin (DE)
(72) Erfinder: KÜHN, Silvio, 16348 Wandlitz (DE); GESCHE, Roland, 63500 Seligenstadt (DE)
(74) Vertreter: Gulde & Partner
(86) Internationale Anmeldenummer: PCT/EP2012/057537
(87) Internationale Veröffentlichungsnummer: WO 2012/146609

(56) Entgegenhaltungen:
- EP-A1- 1 388 739
- US-A1- 2005 156 780
- US-A1- 2005 225 481
- US-A1- 2010 207 820

## Beschreibung

### Technisches Gebiet

Die Erfindung betrifft eine Messvorrichtung zum Messen von Hochfrequenzsignalen mit einem Empfängerschaltkreis.

### Stand der Technik

Bei hochfrequenten Signalen ist es grundsätzlich schwierig, Phasenverschiebungen exakt zu messen, da hierfür eine sehr hohe zeitliche Auflösung der sehr geringen Periodendauer der hochfrequenten Signale notwendig wäre. In vielen Anwendungen ist es jedoch notwendig, die vorliegende Phasenverschiebung exakt zu messen. Dies ist beispielsweise bei der Plasmaerzeugung für plasmabasierte Prozesse wie dem Plasmaätzen oder der Bearbeitung von Oberflächen wichtig, wo die an die Plasmalast abgegebene HF- oder Mikrowellenleistung zur Kontrolle der Prozessparameter gemessen werden soll. Eine solche Plasmalast kann jedoch sehr reaktiv sein, so dass der Phasenwinkel zwischen Strom und Spannung nahe 90° betragen kann. Die Blindleistung ist dann sehr groß im Verhältnis zur Wirkleistung. Um die Wirkleistung jedoch korrekt berechnen zu können, muss der Phasenwinkel sehr genau gemessen werden, da schon geringste Messfehler sich überproportional auf die Bestimmung der Wirkleistung auswirken.

EP 1 388 739 A1 beschreibt ein Laserdistanzmessgerät mit Phasenlaufzeitmessung.

Eine direkte Phasenmessung mit einem Monodynempfänger ist für eine solche Aufgabe nicht genau genug, weshalb beispielsweise Heterodynempfänger oder Sampler für die Messung verwendet werden. Bei einem solchen Heterodynempfänger werden die Messsignale auf eine Zwischenfrequenz herabgemischt, wo sie weiterverarbeitet und beispielsweise digitalisiert und numerisch ausgewertet werden können.

Dabei ist jedoch problematisch, dass die Stabilität einer solchen Umsetzung begrenzt ist. Die Umsetzung wird zudem immer schwieriger, je größer das Verhältnis von Ursprungs- und Zwischenfrequenz wird. Deshalb erlauben Ansätze gemäß dem Stand der Technik bei dem für die Erfindung vorgesehenen Hochfrequenzbereich keine besonders niedrigen Zwischenfrequenzen. Niedrige Zwischenfrequenzen insbesondere von unter 25 kHz ermöglichen jedoch vorteilhaft die direkte Analog-Digital-Umsetzung bei der Zwischenfrequenz mit preiswerter Hardware aus dem Audio-Bereich. Deswegen besteht ein Bedarf an neuen Empfängerstrukturen, die eine genaue Bestimmung eines Phasenwinkels erlauben. Außer der Messung von Phasenwinkeln kann unabhängig hiervon auch ein Bedarf an einer Messung der Amplituden beziehungsweise von Verhältnissen von Amplituden von hochfrequenten Signalen bestehen.

### Zusammenfassung der Erfindung

Ein Aspekt der Erfindung führt daher eine Messvorrichtung gemäß Anspruch 1 zum Messen einer Phasenverschiebung zwischen einem ersten HF-Signal und einem zweiten HF-Signal mit einen neuartigen Empfängerschaltkreis ein. Der Empfängerschaltkreis besitzt einen ersten Signaleingang für ein erstes Eingangssignal, einen zweiten Signaleingang für ein zweites Eingangssignal, einen ersten Signalausgang für ein erstes Ausgangssignal und einen zweiten Signalausgang für ein zweites Ausgangssignal. Erfindungsgemäß verfügt der Empfängerschaltkreis außerdem über einen Lokaloszillator, einen Quadraturmodulator, einen ersten Mischer und einen zweiten Mischer. Dabei sind ein erster Eingang des Quadraturmodulators mit dem ersten Signaleingang und ein zweiter Eingang des Quadraturmodulators mit dem Lokaloszillator verbunden. Außerdem sind ein erster Eingang des ersten Mischers mit dem ersten Signaleingang, ein zweiter Eingang des ersten Mischers mit einem Ausgang des Quadraturmodulators und ein Ausgang des ersten Mischers mit dem ersten Signalausgang verbunden. Ein erster Eingang des zweiten Mischers ist mit dem zweiten Signaleingang, ein zweiter Eingang des zweiten Mischers mit dem Ausgang des Quadraturmodulators und ein Ausgang des zweiten Mischers mit dem zweiten Signalausgang verbunden.

Die Messvorrichtung der Erfindung umfasst einen Auto-Heterodynempfänger dar, bei dem eines der Eingangssignale mit dem Signal des Lokaloszillators auf einen Quadraturmodulator gegeben und das vom Quadraturmodulator erzeugte Ausgangssignal schließlich mit den beiden Eingangssignalen gemischt wird. Das Ausgangssignal des Quadraturmodulators enthält dabei hauptsächlich Spektralanteile, deren Frequenzen abhängig vom Drehsinn des komplexen Lokaloszillators durch entweder Summen- oder Differenzbildung der Signalfrequenz und der Frequenz des Lokaloszillators bestimmt werden. Dieses Ausgangssignal wird jedoch anschließend wieder mit den Eingangssignalen der Anordnung gemischt, wodurch eine weitere Summen- und Differenzbildung mit der Signalfrequenz entsteht. Dabei hebt sich im niederfrequentesten Mischprodukt die Signalfrequenz der Eingangssignale der Empfängeranordnung heraus. Die beiden Ausgangssignale der Empfängeranordnung weisen daher bei idealer Mischung nur noch die Zwischenfrequenz auf. Dabei bleibt jedoch der Phasenbezug der beiden Eingangssignale in den Ausgangssignalen erhalten, so dass der Phasenwinkel nun einfach mit der gewünschten Genauigkeit bei der Zwischenfrequenz bestimmt werden kann. Außerdem vorteilhaft ist, dass die Phasenmessung unabhängig von der tatsächlichen und eventuell schwankenden Frequenz der Messsignale wird.

Der Empfängerschaltkreis der Erfindung kann zur Messung der relativen Phasenlage zweier Signale beziehungsweise bei der Messung einer Wirkleistung verwendet werden. Weiterhin kann beispielsweise eine Überlagerung eines amplitudenmodulierten Signals und eines phasen- oder frequenzmodulierten Signals umgekehrt werden. Da die Frequenz eines Eingangssignals nicht mehr am Ausgang des jeweils nachgeschalteten Mischers erscheint, können Fluktuationen der Frequenz eliminiert werden. Dies bedeutet jedoch gleichzeitig, dass das Ausgangssignal des Mischers nur noch Amplitudenvariationen aufweist. Eine in der Amplitude des Eingangssignals kodierte Information kann so von einer in Frequenz oder Phase des Eingangssignals kodierten Information getrennt werden. Auch ist es mit der Erfindung möglich, eine Amplitude eines Eingangssignals zu bestimmen, indem die Ausgangssignale gemessen und aus diesen durch Rückrechnen auf die Eingangssignale geschlossen wird.

Besonders bevorzugt weist der Empfängerschaltkreis eine mit dem ersten Signalausgang verbundenen ersten Analog-Digital-Umsetzer und einen mit dem zweiten Signalausgang verbundenen zweiten Analog-Digital-Umsetzer auf. Dadurch wird die Auswertung der Phasenmessung vorteilhaft in die digitale Domäne verschoben und kann beispielsweise einfach durch einen Digitalen Signalprozessor (DSP) vorgenommen werden.

Der Lokaloszillator ist vorzugsweise ausgebildet, eine Schwingung mit einer Frequenz von weniger als 50 kHz, besonders bevorzugt von weniger als 25 kHz, zu erzeugen. Bei diesen Frequenzen kann kostengünstige Hardware eingesetzt werden. Auch wird es aufgrund der relativ niedrigen Frequenzen möglich, eine Verminderung der Messgenauigkeit aufgrund einer mangelhaften Analog-Digital-Umsetzung durch Oversampling zu vermeiden.

Der Empfängerschaltkreis kann in bestimmten Ausführungsformen über einen Regelkreis, beispielsweise eine Phase-locked Loop (PLL) oder eine Automatische Frequenzregelung (AFC), verfügen, welcher ausgebildet ist, die Frequenz des Lokaloszillators einzustellen. Obgleich der Empfängerschaltkreis Schwankungen der Frequenzen der Eingangssignale automatisch ausgleicht, erscheinen Schwankungen der Frequenz des Lokaloszillators vollständig in den Ausgangssignalen des Empfängerschaltkreises. Zwar kann eine Verfälschung des Messergebnisses verhindert werden, wenn die Schwankungen ausreichend gering sind, doch ist eine Regelung der Frequenz des Lokaloszillators insbesondere bei Anwendungen von Vorteil, bei denen die Frequenz des Lokaloszillators so hoch ist, dass weniger aufwendige Methoden der Frequenzsynthese wie beispielsweise Direct Digital Synthesis (DDS) ausscheiden. Ein solcher Anwendungsfall kann das direkte Heruntermischen eines Sendesignals, beispielsweise in einem Mobilfunknetz oder einem drahtlosen Datennetz, von einem Frequenzband in ein anderes sein. Hierbei ist vorteilhaft, dass die Umsetzung von dem Ursprungsfrequenzband in das Zielfrequenzband nahezu ohne Latenz möglich ist, wie sie bei einem gewöhnlichen Empfangen der gesendeten Daten und anschließendem Modulieren auf ein neues Trägersignal aufträte. Grundsätzlich kann jedoch jede beliebige stabile Referenztaktquelle verwendet werden, wie beispielsweise eine Schwingung eines Quarzoszillators, eine von einem Quarzoszillator abgeleitete Schwingung oder aber auch eine von einem Digital-Analog-Umsetzer, wie er beispielsweise in einer PC-Soundkarte verwendet wird, erzeugte Schwingung.

Hat das Ausgangssignal des Quadraturmodulators eine vorherbestimmte Amplitude, lässt sich anhand der Amplituden der Ausgangssignale des ersten und des zweiten Mischers auch auf die Amplituden der Eingangssignale des Empfängerschaltkreises rückschließen, so dass eine in den Eingangssignalen enthaltene Amplitudeninformation nicht verloren geht. Hierfür kann eine Amplitudennormalisierungseinheit vorgesehen sein, welche zwischen den Ausgang des Quadraturmodulators und die zweiten Eingänge von erstem und zweitem Mischer geschaltet sein kann. Alternativ kann die Amplitudennormalisierungseinheit auch zwischen den ersten Signaleingang und den ersten Eingang des Quadraturmodulators geschaltet sein, wenn die Amplitude des Signals des Lokaloszillators bekannt oder wenigstens konstant ist, was üblicherweise der Fall ist. Die Amplitudennormalisierungseinheit ist dabei ausgebildet, ein Ausgangssignal mit einer vorbestimmten Amplitude auszugeben, was beispielsweise durch spezielle Verstärkerbausteine oder Limiter erreicht werden kann. Bevorzugt wird die Amplitudennormalisierungseinheit als Regelkreis aufgebaut, der eine mittlere Amplitude oder Leistung entweder des Ausgangs- oder des Eingangssignals der Amplitudennormalisierungseinheit bestimmt und einen Verstärkungsfaktor eines zwischen Eingang und Ausgang der Amplitudennormalisierungseinheit geschalteten Verstärkers so anpasst, dass der Verstärker im Mittel ein Ausgangssignal der gewünschten vorbestimmten Amplitude erzeugt. Derartige Verfahren sind als Automatic Gain Control (AGC) bekannt.

Der Empfängerschaltkreis kann über einen den ersten und zweiten Signaleingängen vorgeschalteten Messaufnehmer verfügen, der ausgebildet ist, einen jeweiligen Signalanteil von an einem ersten Eingang und einem zweiten Eingang des Messaufnehmers anliegenden Signalen auszukoppeln und an den ersten und den zweiten Signaleingang des Empfängerschaltkreises auszugeben. Beispiele für einen solchen Messaufnehmer können ein Richtkoppler oder eine Messbrücke sein.

Der Richtkoppler ist dabei ausgebildet, eine vorlaufende Welle auf einen ausgewählten Signaleingang des ersten oder des zweiten Signaleinganges des Empfängerschaltkreises und eine rücklaufende Welle auf einen verbleibenden Signaleingang des ersten oder des zweiten Signaleinganges des Empfängerschaltkreises zu geben. Dadurch können der Phasenwinkel und die absoluten Amplituden der Eingangssignale und somit die Wirkleistung bei einer plasmabezogenen oder sonstigen im HF- oder Mikrowellenbereich angesiedelten Anwendung bestimmt werden. Alternativ können die Eingänge des Empfängerschaltkreises beispielsweise auch mit einer durch einen Spannungsteiler passend geteilten Spannung beaufschlagt werden.

Einem ausgewählten Signaleingang des ersten oder des zweiten Signaleinganges des Empfängerschaltkreises kann ein Stromwandler vorgeschaltet sein, welcher ausgebildet ist, einen Strom in eine Spannung zu wandeln. Der Empfängerschaltkreis ist vorzugsweise für ein Arbeiten mit Spannungssignalen ausgelegt, weshalb ein bei einer Messung der Wirkleistung auszuwertender Strom in eine Spannung gewandelt werden sollte. In einer solchen Schaltungsanordnung bietet sich vorteilhaft der Einsatz eines Spannungsteilers an dem verbleibenden Signaleingang des Empfängerschaltkreises an, da als zweites Eingangssignal bei der Wirkleistungsmessung ein Spannungssignal ausgewertet werden muss.

Vorzugsweise weist wenigstens einer von erstem und zweitem Mischer ausgangsseitig ein Tiefpassfilter auf. Das Tiefpassfilter besitzt hierbei die Aufgabe, höherfrequente Mischprodukte zu eliminieren. Dementsprechend ist es vorteilhaft, eine Grenzfrequenz des oder der Tiefpassfilter von größer oder gleich der Frequenz des Lokaloszillators (Zwischenfrequenz) anzusetzen.

Die Phasenmesseinheit kann nach einem beliebigen im Stand der Technik bekannten Prinzip aufgebaut sein. Erfindungswesentlich ist, dass der Empfängerschaltkreis des ersten Erfindungsaspektes zwei hochfrequente Eingangssignale, beispielsweise aus dem Mikrowellenbereich, unter Beibehaltung der Phasenbeziehung der beiden Eingangssignale auf eine niedrigere Frequenz (eine NF-Frequenz) umsetzen kann, wobei gleichlaufende Schwankungen der Frequenzen der Eingangssignale unterdrückt werden. Dadurch werden die schaltungstechnischen Anforderungen an die Phasenmesseinheit drastisch reduziert.

### Ausführungsbeispiele der Erfindung

Die Erfindung wird im Folgenden anhand zweier Abbildungen von Ausführungsbeispielen vertiefend erläutert.

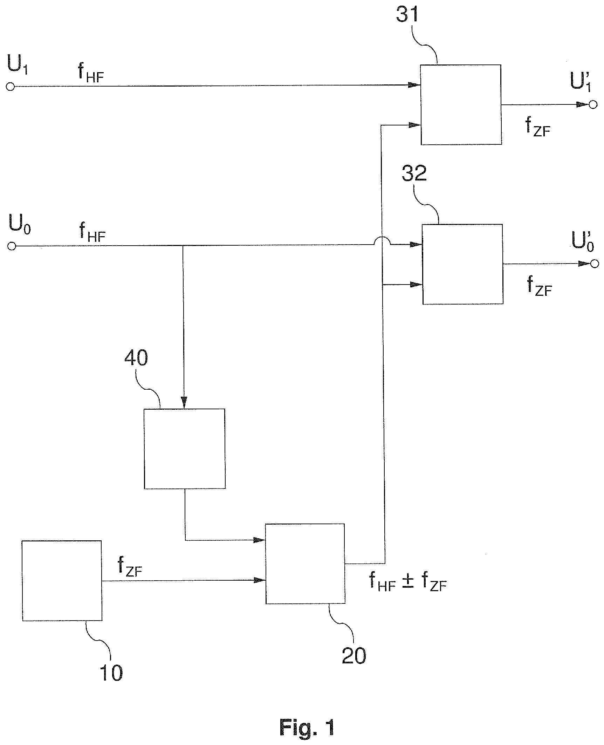

Fig. 1 zeigt ein erstes Ausführungsbeispiel eines erfindungsgemäßen Empfängerschaltkreises als Blockdiagramm. An zwei Signaleingängen des Empfängerschaltkreises liegen Eingangssignale U₀ und U₁ mit einer Frequenz von f_{HF} an. Bei den beiden Eingangssignalen kann es sich um zwei Spannungssignale handeln, von denen eines aus einem Strom abgeleitet ist, der mit dem anderen Spannungssignal in Wirkzusammenhang steht. Durch Messung des Phasenwinkels zwischen den beiden Eingangssignalen kann dann ein Verhältnis von Wirkleistung zu Blindleistung bestimmt werden.

Ein beliebiges der beiden Eingangssignale wird an einen Eingang eines Quadraturmodulators 20 gegeben. Vorteilhafterweise wird das ausgewählte Eingangssignal dabei durch eine Amplitudennormalisierungseinheit 40 geleitet, welche ausgebildet ist, das ausgewählte Eingangssignal auf eine vorbestimmte Amplitude zu verstärken oder zu dämpfen. Auf den zweiten Eingang des Quadraturmodulators 20 wird ein von einem Lokaloszillator 10, welcher in beliebiger Weise aufgebaut sein kann und lediglich geeignet zu sein braucht, eine Referenzschwingung mit einer Zwischenfrequenz zu erzeugen, erzeugtes Schwingungssignal geschaltet. Das Ausgangssignal des Quadraturmodulators 20 enthält dann bekanntermaßen insbesondere Frequenzanteile mit einer Frequenz von entweder f_{HF} + f_{ZF} oder f_{HF} - f_{ZF}, wobei das Vorzeichen der Verknüpfung vom Drehsinn des in der komplexen Ebene betrachteten Lokaloszillators abhängt. Das vom Quadraturmodulator 20 erzeugte Signal wird nun mehr in zwei Mischern 31 und 32 mit einem jeweiligen der beiden Eingangssignale U₀ und U₁ gemischt. Dabei entstehen verschiedene Modulationsprodukte, von denen aufgrund der erneuten Summen- und Differenzbildung mit der Frequenz f_{HF} der Eingangssignale U₀ und U₁ die niedrigsten, U₀' und U₁', eine Frequenz von f_{ZF} aufweisen, so dass sich die hohe Frequenz f_{HF} der Eingangssignale weghebt. Dabei bleibt jedoch das Phasenverhältnis von U₀' und U₁' erhalten und kann nun mehr mit deutlich einfacheren Schaltungsmitteln ausgewertet werden. Der Vorteil der Amplitudennormalisierungseinheit 40 besteht darin, dass auch das vom Quadraturmodulator 20 auf die entsprechenden Eingänge der Mischer 31 und 32 gegebene Signal eine bekannte und insbesondere konstante Amplitude aufweist, so dass aus den Amplituden der Ausgangssignale der Gesamtanordnung auf die Amplituden der Eingangssignale in einfacher Weise rückgeschlossen werden kann.

Die Wege von den Signaleingängen zu den Signalausgängen können als Kanäle bezeichnet werden, wobei der Kanal, dessen Eingangssignal U₀ auch als Eingangssignal des Quadraturmodulators 20 fungiert, als Referenzkanal angesehen werden kann. Generell kann die Erfindung mit einer beliebigen Mehrzahl von Kanälen aufgebaut werden, wobei jedoch üblicherweise nur ein Referenzkanal vorgesehen wird.

Der Empfängerschaltkreis der Erfindung ist aus Standardkomponenten aufgebaut, welche einfach für die für den geplanten Anwendungszweck vorauszusetzenden Frequenzen realisiert werden können. Die Messung der Wirkleistung bei einer hochfrequenten Anregung beispielsweise eines Plasmas kann somit kostengünstig und genau durchgeführt werden.

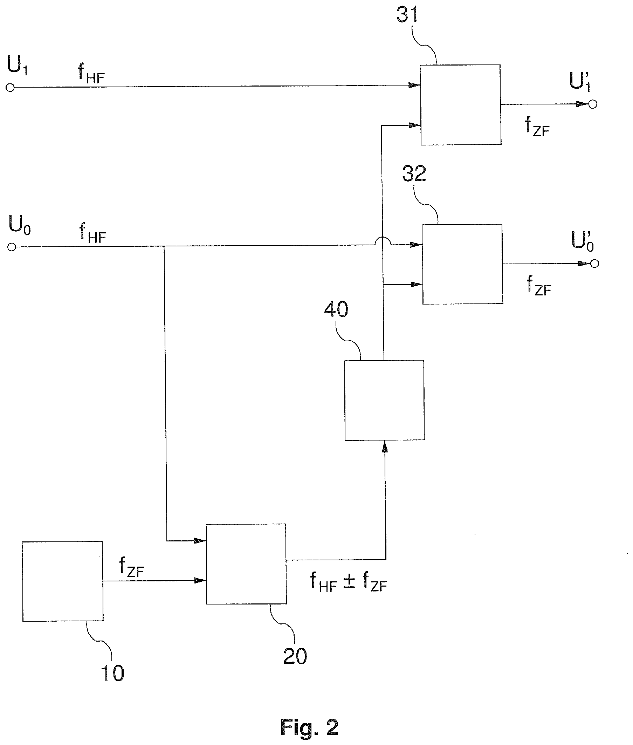

Fig. 2 zeigt ein zweites Ausführungsbeispiel eines erfindungsgemäßen Empfängerschaltkreises als Blockdiagramm. Das zweite Ausführungsbeispiel unterscheidet sich von dem von Fig. 1 durch die alternative Platzierung der Amplitudennormalisierungseinheit 40, welche im zweiten Ausführungsbeispiel zwischen den Ausgang des Quadraturmodulators 20 und die entsprechenden Eingänge der Mischer 31 und 32 geschaltet ist. Amplitudenschwankungen, die in der Mischung durch den Quadraturmodulator von Phasen- oder Amplitudenfehlern des komplexen Lokaloszillatorsignals herrühren oder durch eine Nichtidealität des Quadraturmodulators selbst entstehen können, können hierbei mit einer hinreichend schnellen Amplitudenregelung ausgeglichen werden. Dadurch steigt die Genauigkeit des resultierenden Ausgangssignals.

## Patentansprüche

1. Eine Messvorrichtung zum Messen einer Phasenverschiebung zwischen einem ersten HF-Signal und einem zweiten HF-Signal, umfassend einen Empfängerschaltkreis mit einem ersten Signaleingang für ein erstes Eingangssignal, einem zweiten Signaleingang für ein zweites Eingangssignal, einem ersten Signalausgang für ein erstes Ausgangssignal und einem zweiten Signalausgang für ein zweites Ausgangssignal, weiterhin umfassend einen Lokaloszillator (10), einen Quadraturmodulator (20), einen ersten Mischer (31) und einen zweiten Mischer (32), wobei ein erster Eingang des Quadraturmodulators (20) mit dem Lokaloszillator (10) verbunden ist, wobei ein erster Eingang des ersten Mischers (31) mit dem ersten Signaleingang und ein Ausgang des ersten Mischers (31) mit dem ersten Signalausgang verbunden ist, und wobei ein erster Eingang des zweiten Mischers (32) mit dem zweiten Signaleingang, ein zweiter Eingang des zweiten Mischers (32) mit dem Ausgang des Quadraturmodulators (20) und ein Ausgang des zweiten Mischers (32) mit dem zweiten Signalausgang verbunden ist, **dadurch gekennzeichnet, dass** ein zweiter Eingang des Quadraturmodulators (20) mit dem ersten Signaleingang verbunden ist und zweite Eingänge der Mischer (31, 32) mit einem Ausgang des Quadraturmodulators (20) verbunden sind, weiterhin umfassend eine mit dem ersten und dem zweiten Signalausgang des Empfängerschaltkreises verbundene Phasenmesseinheit, welche ausgebildet ist, eine Phasenverschiebung zwischen einem ersten NF-Signal auf dem ersten Signalausgang und einem zweiten NF-Signal auf dem zweiten Signalausgang zu bestimmen, wobei der Quadraturmodulator (20) so ausgebildet ist, dass ein Ausgangssignal des Quadraturmodulators (20) hauptsächlich Spektralanteile enthält, deren Frequenzen abhängig vom Drehsinn des Lokaloszillators durch entweder Summen- oder Differenzbildung der Frequenz des erstes Eingangssignals und der Frequenz des Lokaloszillators bestimmt werden.

2. Messvorrichtung von Anspruch 1, mit einem mit dem ersten Signalausgang verbundenen ersten Analog-Digital-Umsetzer und einem mit dem zweiten Signalausgang verbundenen zweiten Analog-Digital-Umsetzer.

3. Messvorrichtung von einem der Ansprüche 1 oder 2, bei dem der Lokaloszillator (10) ausgebildet ist, eine Schwingung mit einer Frequenz von weniger als 50 kHz, vorzugsweise von weniger als 25 kHz, zu erzeugen.

4. Messvorrichtung von einem der vorhergehenden Ansprüche, mit einem Regelkreis, beispielsweise einer Phase-locked Loop oder einer Automatischen Frequenzregelung, wobei der Regelkreis ausgebildet ist, die Frequenz des Lokaloszillators (10) einzustellen.

5. Messvorrichtung von einem der vorhergehenden Ansprüche, mit einer Amplitudennormalisierungseinheit (40), welche entweder zwischen den ersten Signaleingang und den Quadraturmodulator (20) oder zwischen den Quadraturmodulator (20) und die zweiten Eingänge des ersten und des zweiten Mischers (31, 32) geschaltet und ausgebildet ist, ein Eingangssignal mit einer unbekannten Eingangsamplitude als Ausgangssignal mit einer vorbestimmten Ausgangsamplitude auszugeben.

6. Messvorrichtung von einem der vorhergehenden Ansprüche, mit einem den ersten und zweiten Signaleingängen vorgeschalteten Messaufnehmer, der ausgebildet ist, einen jeweiligen Signalanteil von an einem ersten Eingang und einem zweiten Eingang des Messaufnehmers anliegenden Signalen auszukoppeln und an den ersten und den zweiten Signaleingang des Empfängerschaltkreises auszugeben.

7. Messvorrichtung des vorhergehenden Anspruchs, bei dem der Messaufnehmer ein Richtkoppler und dazu ausgebildet ist, eine vorlaufende Welle auf einen ausgewählten Signaleingang des ersten oder des zweiten Signaleinganges des Empfängerschaltkreises und eine rücklaufende Welle auf einen verbleibenden Signaleingang des ersten oder des zweiten Signaleinganges des Empfängerschaltkreises zu geben.

8. Messvorrichtung von einem der vorhergehenden Ansprüche, bei dem einem ausgewählten Signaleingang des ersten oder des zweiten Signaleinganges des Empfängerschaltkreises ein Stromwandler vorgeschaltet ist, welcher ausgebildet ist, einen Strom in eine Spannung zu wandeln.

9. Messvorrichtung von einem der vorhergehenden Ansprüche, bei dem wenigstens einer von erstem und zweitem Mischer (31, 32) ausgangsseitig ein Tiefpassfilter aufweist.

## Claims

1. A measuring instrument for measuring a phase shift between a first HF signal and a second HF signal, comprising a receiver circuit having a first signal input for a first input signal, a second signal input for a second input signal, a first signal output for a first output signal and a second signal output for a second output signal, additionally comprising a local oscillator (10), a quadrature modulator (20), a first mixer (31) and a second mixer (32), wherein a first input of the quadrature modulator (20) is connected to the local oscillator (10), wherein a first input of the first mixer (31) is connected to the first signal input and an output of the first mixer (31) is connected to the first signal output, and wherein a first input of the second mixer (32) is connected to the second signal output, a second input of the second mixer (32) is connected to the output of the quadrature modulator (20) and an output of the second mixer (32) is connected to the second signal output, **characterized in that** a second input of the quadrature modulator (20) is connected to the first signal input and second inputs of the mixers (31, 32) are connected to an output of the quadrature modulator (20), additionally comprising a phase measuring unit connected to the first and the second signal output of the receiver circuit, which phase measuring unit is configured to determine a phase shift between a first NF signal on the first signal output and a second NF signal on the second signal output, wherein the quadrature modulator (20) is configured such that an output signal of the quadrature modulator (20) mainly contains spectral components, the frequencies of which are determined as a function of the direction of rotation of the local oscillator by either totaling or obtaining the difference of the frequency of the first input signal and the frequency of the local oscillator.

2. The measuring instrument of Claim 1, having a first analogue-digital converter connected to the first signal output and a second analogue-digital converter connected to the second signal output.

3. The measuring instrument of any one of Claims 1 or 2, in which the local oscillator (10) is configured to produce an oscillation having a frequency of less than 50 kHz, preferably of less than 25 kHz.

4. The measuring instrument of any one of the preceding claims, having a closed loop control system, for example a phase-locked loop or an automatic frequency control, wherein the closed loop control system is configured to adjust the frequency of the local oscillator (10).

5. The measuring instrument of any one of the preceding claims, having an amplitude normalization unit (40), which is connected either between the first signal input and the quadrature modulator (20) or between the quadrature modulator (20) and the second inputs of the first and the second mixer (31, 32) and is configured to emit an input signal with an unknown input amplitude as an output signal with a predetermined output amplitude.

6. The measuring instrument of any one of the preceding claims, having a measurement sensor which is connected in series to the first and second signal inputs, which measurement sensor is configured to couple out a respective signal component of signals present at a first input and a second input of the measurement sensor and to emit said signal component to the first and the second signal input of the receiver circuit.

7. The measuring instrument of the preceding claim, in which the measurement sensor is a directional coupler and is configured to give a forward-traveling wave to a selected signal input of the first or second signal input of the receiver circuit and a backward-traveling wave to a remaining signal input of the first or second signal input of the receiver circuit.

8. The measuring instrument of any one of the preceding claims, in which a current transformer is connected in series to a selected signal input of the first or second signal input of the receiver circuit, which current transformer is configured to transform a current into a voltage.

9. The measuring instrument of any one of the preceding claims, in which at least one of the first and second mixers (31, 32) has a low-pass filter on the output side.

## Revendications

1. Dispositif de mesure pour la mesure d'un déphasage entre un premier signal HF et un deuxième signal HF, comprenant un circuit de réception avec une première entrée de signal pour un premier signal d'entrée, une deuxième entrée de signal pour un deuxième signal d'entrée, une première sortie de signal pour un premier signal de sortie et une deuxième sortie de signal pour un deuxième signal de sortie, comprenant en outre un oscillateur local (10), un modulateur en quadrature (20), un premier mélangeur (31) et un deuxième mélangeur (32), une première entrée du modulateur en quadrature (20) étant raccordée à l'oscillateur local (10), une première entrée du premier mélangeur (31) étant raccordée à la première entrée de signal, et une sortie du premier mélangeur (31) étant raccordée à la première sortie de signal, et une première entrée du deuxième mélangeur (32) étant raccordée à la deuxième entrée de signal, une deuxième entrée du deuxième mélangeur (32) étant raccordée à la sortie du modulateur en quadrature (20), et une sortie du deuxième mélangeur (32) étant raccordée à la deuxième sortie de signal, **caractérisé en ce qu'**une deuxième entrée du modulateur en quadrature (20) est raccordée à la première entrée de signal, et des deuxièmes entrées des mélangeurs (31, 32) sont raccordées à une sortie du modulateur en quadrature (20), comprenant en outre une unité de mesure de phase, raccordée à la première et à la deuxième sortie de signal du circuit de réception, qui est constituée pour définir un déphasage entre un premier signal BF sur la première sortie de signal et un deuxième signal BF sur la deuxième sortie de signal, le modulateur en quadrature (20) étant constitué de telle sorte qu'un signal de sortie du modulateur en quadrature (20) contient principalement des fractions spectrales dont les fréquences sont définies en fonction du sens de rotation de l'oscillateur local soit par la totalisation soit par la soustraction de la fréquence du premier signal d'entrée et de la fréquence de l'oscillateur local.

2. Dispositif de mesure selon la revendication 1, avec un premier convertisseur analogique-numérique raccordé à la première sortie de signal et un deuxième convertisseur analogique-numérique raccordé à la deuxième sortie de signal.

3. Dispositif de mesure selon l'une quelconque des revendications 1 ou 2, dans lequel l'oscillateur local (10) est constitué pour produire une oscillation avec une fréquence inférieure à 50 kHz, de préférence inférieure à 25 kHz.

4. Dispositif de mesure selon l'une quelconque des revendications précédentes, avec un circuit de régulation, par exemple une phase-locked loop ou une régulation de fréquence automatique, le circuit de régulation étant constitué pour régler la fréquence de l'oscillateur local (10).

5. Dispositif de mesure selon l'une quelconque des revendications précédentes, avec une unité de normalisation d'amplitude (40) qui est montée soit entre la première entrée de signal et le modulateur en quadrature (20) soit entre le modulateur en quadrature (20) et les deuxièmes entrées du premier et du deuxième mélangeur (31, 32), et constituée pour délivrer un signal d'entrée ayant une amplitude d'entrée inconnue en tant que signal de sortie ayant une amplitude de sortie prédéfinie.

6. Dispositif de mesure selon l'une quelconque des revendications précédentes, avec un enregistreur de mesure, monté en amont des première et deuxième entrées de signal, qui est constitué pour découpler une fraction de signal respective de signaux présents sur une première entrée et une deuxième entrée de l'enregistreur de mesure et la délivrer à la première et la deuxième entrée de signal du circuit de réception.

7. Dispositif de mesure selon l'une quelconque des revendications précédentes, dans lequel l'enregistreur de mesure est un coupleur directionnel et est constitué pour donner une onde progressive sur une entrée de signal sélectionnée de la première ou de la deuxième entrée de signal du circuit de réception et une onde régressive sur une entrée de signal restante de la première ou de la deuxième entrée de signal du circuit de réception.

8. Dispositif de mesure selon l'une quelconque des revendications précédentes, dans lequel un convertisseur de courant est monté en amont d'une entrée de signal sélectionnée de la première ou de la deuxième entrée de signal du circuit de réception et est constitué pour convertir une intensité en une tension.

9. Dispositif de mesure selon l'une quelconque des revendications précédentes, dans lequel au moins un mélangeur parmi le premier et le deuxième mélangeur (31, 32) présente côté sortie un filtre passe-bas.
